(19) **Europäisches Patentamt / European Patent Office / Office européen des brevets**

(11) **EP 0 939 312 B1**

(12) **FASCICULE DE BREVET EUROPEEN**

(45) Date de publication et mention
de la délivrance du brevet:
**08.07.2009 Bulletin 2009/28**

(51) Int Cl.:
**G01J 11/00** *(2006.01)* **G01J 9/02** *(2006.01)*

(21) Numéro de dépôt: **99400298.8**

(22) Date de dépôt: **09.02.1999**

(54) **Dispositif pour mesurer le spectre complexe (amplitude et phase) d'impulsions optiques**

Vorrichtung zum Messen des komplexen Spektrums (Amplitude und Phase) von optischen Pulsen

Apparatus for measuring the complex spectrum (amplitude and phase) of optical pulses

(84) Etats contractants désignés:
**DE GB**

(30) Priorité: **12.02.1998 FR 9801694**

(43) Date de publication de la demande:
**01.09.1999 Bulletin 1999/35**

(73) Titulaire: **FRANCE TELECOM**
**75015 Paris (FR)**

(72) Inventeurs:
• **Debeau, Jean**
**22300 Lannion (FR)**
• **Boittin, Rémi**
**22300 Ploulec'h (FR)**

(74) Mandataire: **Benetiere, Marion et al**
**France Telecom**
**R&D/PIV/Brevets**
**38-40, rue du Général Leclerc**
**92794 Issy les Moulineaux cedex 09 (FR)**

(56) Documents cités:
**DE-A- 19 549 303**

• **TOMARU T ET AL: "LINEAR MEASUREMENT OF WEAK 1.57 MUM OPTICAL PULSE TRAIN BY HETERODYNE AUTOCORRELATION" APPLIED PHYSICS LETTERS, vol. 69, no. 26, 23 décembre 1996, pages 3978-3980, XP000643683**
• **PRADE B S ET AL: "A SIMPLE METHOD FOR THE DETERMINATION OF THE INTENSITY AND PHASE OFULTRASHORT OPTICAL PULSES" OPTICS COMMUNICATIONS, vol. 113, no. 1/03, 15 décembre 1994, pages 79-84, XP000485290**

**Description**

Domaine technique et art antérieur

La présente invention a pour objet un dispositif mettant en oeuvre un procédé permettant de mesurer le spectre complexe d'impulsions optiques. Elle trouve une application là où l'on a besoin de caractériser finement des impulsions optiques. Une application industrielle est, notamment, la caractérisation fine de l'émetteur optique dans les transmissions numériques par fibres optiques. Cette caractérisation est d'autant plus importante que le produit (débit numérique)$^2$-portée est élevé. En effet, la modulation de phase optique parasite associée à la modulation d'intensité ("chirp") influe sur la propagation de la fibre optique. Cela est encore plus vrai pour les transmissions utilisant une modulation de type RZ (retour à zéro), faisant intervenir une propagation de type soliton ou pseudo-soliton.

Les impulsions optiques mises en oeuvre dans les télécommunications par fibre optique ont un spectre qui couvre une bande de fréquences très faible (quelques GHz) par rapport à la porteuse optique (200 THz). Elles sont décrites usuellement par leur profil temporel, c'est-à-dire par le signal photodétecté, et caractérisées grossièrement par leur largeur à mi-hauteur. Mais, pour calculer la déformation provoquée par leur propagation dans les fibres optiques (dispersion chromatique, effet Kerr) il est important de connaître, en plus, la variation de la fréquence optique (c'est-à-dire la distorsion de phase optique) au cours de l'impulsion ("chirp"). Cette variation est caractérisée, de façon grossière, par la mesure du produit $p = \Delta t \times \Delta f$, où $\Delta t$=largeur à mi-hauteur de l'impulsion photodétectée et $\Delta f$=largeur à mi-hauteur du spectre optique. Ce produit $p$ est minimum lorsque le "chirp" est nul (fréquence optique constante le long de l'impulsion), mais ce minimum est variable suivant le profil de l'impulsion.

En résumé, le signal délivré par un émetteur optique est un signal à bande étroite que l'on décrit par son enveloppe complexe $v(t)$, ou par son spectre optique complexe $V(f)$.

La manière la plus simple de mesurer les impulsions optiques (module de $v(t)$) est d'utiliser une photodiode suivie d'un oscilloscope à échantillonnage. Cela est vrai pour des impulsions de largeur supérieure à 20 ps, car la réponse impulsionnelle du couple photodiode-oscilloscope n'est pas inférieure à 15 ps. Pour les impulsions plus fines, on a recourt à une technique qui mesure le produit ou la fonction d'auto-corrélation. Mais, cela ne donne qu'une estimation de la largeur des impulsions, car il faut faire une hypothèse sur la forme des impulsions.

La mesure de la phase $v(t)$ est beaucoup plus délicate. Dans la littérature on trouve différentes méthodes dont le principe repose, en général, sur la mesure du spectre résolu dans le temps.

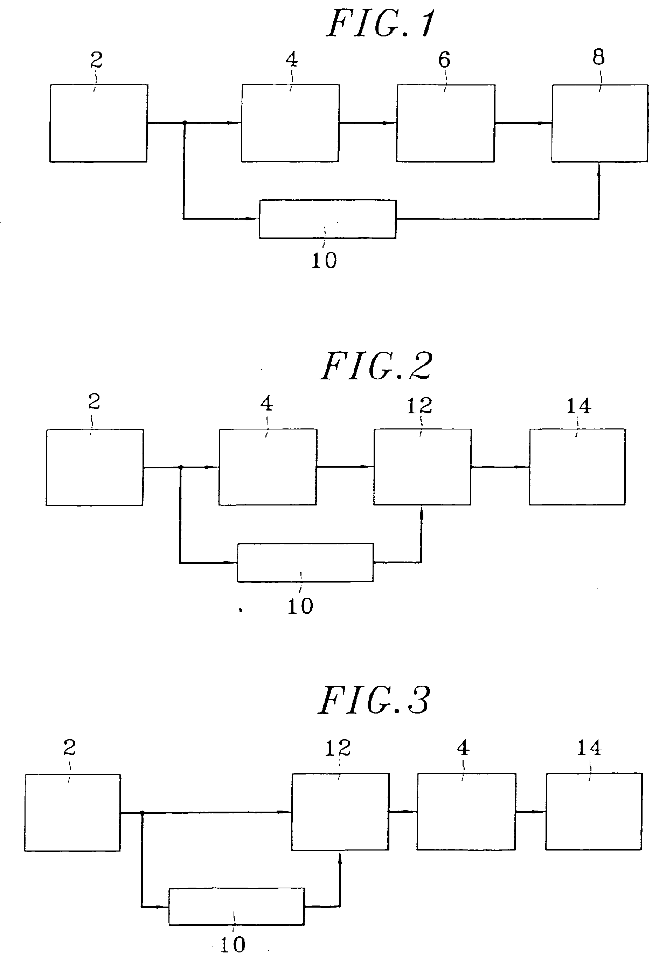

La figure 1 représente schématiquement le principe décrit dans l'article de R.A. Linke et al., intitulé "Modulation Induced Transient Chirping in Single Frequency Lasers", paru dans IEEE Journal Quantum Electronics, vol. QE 21, p. 593-597, 1985. Des impulsions optiques sont engendrées par un générateur 2 d'impulsions optiques. Les impulsions sont filtrées par un filtre accordable 4 et sont détectées par un photorécepteur 6 à large bande, qui produit des signaux envoyés sur un oscilloscope à échantillonnage 8. Un retard variable 10 déclenche la base de temps de l'oscilloscope 8. Cette méthode est limitée aux impulsions relativement larges (de largeur supérieure à 30 ps), cette limitation étant imposée par le temps de réponse du photorécepteur.

Sur les figures 2 et 3 des références identiques ou correspondantes à celles de la figure 1 y désignent des éléments correspondants.

La figure 2 représente le principe du dispositif décrit dans l'article de J.L.A. Chilla et al., "Direct determination of the amplitude and the phase of femtosecond light pulses", Optics Letters, vol. 16, n° 1, pp. 39-41, 1991.

Le filtre 4 est un réseau de diffraction rendu accordable par le déplacement d'un miroir. Une porte optique 12 est commandée par l'impulsion à mesurer et échantillonne l'impulsion filtrée. Cette porte réalise la fonction d'inter-corrélation de l'impulsion filtrée avec l'impulsion à mesurer. Elle est réalisée de façon classique par la génération, dans un élément non-linéaire, du second harmonique de la fréquence optique de l'impulsion à mesurer. La référence 14 désigne un photorécepteur basses fréquences.

La figure 3 représente, de façon aussi très schématique, le principe du dispositif décrit dans l'article de D.J. Kane et al., "Characterization of Arbitrary Femtosecond Pulses Using Frequency-Resolved Optical Gating", IEEE Journal Quantum Electronics, vol. QE-29, pp. 571-579, 1993.

Une porte optique 12 est commandée par l'impulsion à mesurer et échantillonne cette même impulsion. Le filtre optique accordable 4 filtre cette fois-ci un échantillon de l'impulsion à mesurer. Comme dans l'article précédent la fonction "porte optique" est obtenue à l'aide de la génération du second harmonique dans un élément non-linéaire, comme cela est réalisé de façon classique dans un auto-corrélateur optique.

Dans les techniques décrites ci-dessus, l'impulsion optique à mesurer est échantillonnée dans le domaine des fréquences par un filtre accordable (réseau, spectromètre, analyseur de spectre) puis dans le domaine temporel (photodiode + oscilloscope à échantillonnage ou produit d'auto-corrélation ou produit d'inter-corrélation) ou vice versa. Si l'on veut une grande résolution dans le domaine des fréquences, le filtre doit être étroit. Mais, alors, l'impulsion est élargie. D'où une mauvaise résolution dans le domaine temporel. Le temps et la fréquence étant deux grandeurs inverses, il est impossible, par la méthode du spectre résolu dans le temps telle que mise en oeuvre dans les articles cités ci-dessus, de mesurer la variation de la fréquence instantanée le long de l'impulsion avec une grande précision. Typiquement, cette précision est évaluée à $1/\Delta t$ ($\Delta t$= largeur de l'impulsion à mi-hauteur).

Les autres inconvénients de ces méthodes sont les suivantes :

- le filtre accordable doit avoir un temps de propagation indépendant de la fréquence, avec une précision inférieure à environ 1 fs ; ceci est très difficile à réaliser, d'où la nécessité d'un étalonnage lui-même difficile à mettre en oeuvre,
- la mesure de l'impulsion optique nécessite un double échantillonnage (un dans le domaine des fréquences, l'autre dans le domaine temporel), d'où une dispersion de l'énergie et l'obligation de disposer d'impulsions de forte énergie. Cela est encore plus vrai lorsque la méthode met en oeuvre des effets non-linéaires, comme dans les articles de Chilla et al. et de Kane et a1. cités ci-dessus,
- dans les articles de Chilla et al. et Kane et al. décrits ci-dessus, on cherche l'enveloppe complexe v(t) qui correspond le mieux aux mesures. La solution trouvée n'est pas forcément unique.

Une autre méthode de mesure de l'enveloppe complexe est décrite dans l'article de B.S. Prade et al., "A Simple method for the determination of the intensity and phase of ultrashort optical pulse", Optics Communications, pp. 79-84, 1994. Le principe de cette méthode consiste à comparer le spectre d'intensité de l'impulsion à mesurer à celui que l'on obtient après transmission dans une fibre optique. Ces deux spectres sont différents à cause des effets non-linéaires dans la fibre (effet Kerr). Alors, on cherche une enveloppe complexe v(t) qui, par calcul, correspond à ces deux spectres-Mais la solution n'est, d'une part, pas unique, et, d'autre part, elle est très sensible à la précision de mesure. Il est rare de trouver le résultat correct, ce qui rend cette méthode inutilisable.

Un article de Tomaru T. et al. intitulé "Linear Measurement of Weak 1.57 Mum Optical Pulse Train by Heterodyne Autocorrelation", (Applied Physics Letters, vol. 69, n°26) divulgue un dispositif de mesure de la largeur et de la phase d'impulsions optiques par autocorrélation hétérodyne. Les impulsions à mesurer sont envoyées, d'une part, dans un dispositif de décalage de fréquence acousto-optique et, d'autre part, dans une ligne à retard. L'autocorrélation est obtenue par la mesure du battement des deux signaux à l'aide d'une photodiode.

Exposé de l'invention

L'invention, définie dans la présente revendication 1, concerne un dispositif pour la détermination de la relation de phase d'un signal dont le spectre comporte une composante spectrale à une fréquence optique centrale $f_o$ et des raies des fréquences $f_n = f_o \pm nF$, n entier, comportant des moyens pour produire des signaux représentatifs de différences de phase entre les deux raies de chaque paire de raies adjacentes.

Ce dispositif permet d'aller rechercher directement la relation de phase du signal, et ne nécessite pas de réaliser un double échantillonnage du signal, à la fois temporel et spectral. De plus, ce dispositif ne nécessite pas la mise en oeuvre d'effets non-linéaires. Enfin, il n'est plus nécessaire de rechercher une enveloppe qui s'approche au mieux des mesures.

La mesure de phase est faite de façon directe, alors que, dans les méthodes qui sont actuellement les plus utilisées, la phase est retrouvée. En d'autres termes, dans ces méthodes connues, on cherche une fonction représentant la phase en fonction de la fréquence optique qui est en accord avec les mesures, d'où grande imprécision dans les résultats, et surtout des risques d'ambiguïté.

Des moyens peuvent en outre être prévus pour produire un signal représentatif de la phase de chaque raie, à partir des signaux représentatifs des différences de phase de chaque paire de raies adjacentes.

Selon un mode particulier de réalisation, les moyens pour produire des signaux représentatifs de différences de phase entre deux raies $f_n$ et $f_{n+1}$ comportent :

- des moyens pour convertir les deux raies $f_n$ et $f_{n+1}$ en deux raies de même fréquence : $f_n + 0,5F$
- et des moyens pour produire un signal représentatif de la phase d'un signal d'interférence entre les deux raies de fréquence $f_n + 0,5F$.

Ainsi, le signal mesuré n'interfère pas avec le signal initial.

Par exemple, on module le signal initial avec un signal de fréquence F/2 et on déphase le signal de fréquence F/2 et le signal dont on veut mesurer le spectre l'un par rapport à l'autre.

Selon l'invention, l'impulsion optique à mesurer est modulée, et de préférence de façon sinusoïdale et en synchronisme avec cette impulsion à mesurer. C'est en faisant varier l'instant $\tau$ de synchronisation (ou la phase relative du signal de fréquence F/2 et du signal dont on veut mesurer le spectre) que l'on peut remonter à la phase optique relative de l'impulsion.

Selon une variante, les moyens pour produire des signaux représentatifs de différences de phase entre deux

raies $f_n$ et $f_{n+1}$ comportent des moyens pour convertir les deux raies $f_n$ et $f_{n+1}$ en deux raies de fréquence $f_n+0,5F\pm\Delta F$,

où $\dfrac{\Delta F}{F} << 1$ (par exemple : $\Delta F/F$ inférieur à $10^{-2}$ ou $10^{-3}$ ou $10^{-4}$), et des moyens pour produire un signal représentatif de l'intensité à la fréquence $f_n+0,5F$.

Selon encore une autre variante, les moyens pour produire des signaux représentatifs de différences de phase entre deux raies $f_n$ et $f_{n+1}$ comportent des moyens pour convertir chaque raie $f_n$ en deux raies de fréquence $f_n-F$ et $f_n+F$ et pour produire un signal représentatif de la phase d'un signal d'interférence entre les raies de fréquence $f_n$.

La mesure du spectre complexe est aussi une mesure précise, et surtout fidèle, car elle ne réclame pas d'étalonnage. Cette méthode de mesure peut constituer une méthode de référence.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- Les figures 1 à 3 représentent schématiquement divers dispositifs et procédés de l'art antérieur.
- La figure 4 représente un mode de réalisation d'un dispositif selon l'invention.
- La figure 5 représente un spectre de raies.
- La figure 6 est un schéma de principe d'un modulateur de type Mach Zehnder.
- Les figures 7A à 7C illustrent le fonctionnement d'un modulateur de type Mach-Zehnder.
- La figure 8A représente un spectre optique du signal à l'entrée du modulateur.
- La figure 8B représente un spectre optique du signal à la sortie du modulateur.
- La figure 9 représente un mode de réalisation d'un dispositif expérimental pour la mesure d'un spectre optique continu.
- La figure 10 illustre le résultat de la mesure de l'intensité I(t) et de la fréquence instantanée d'une impulsion.
- La figure 11 représente une comparaison de la fonction d'auto-corrélation d'un signal optique, mesurée par le dispositif selon l'invention, avec celle mesurée, de façon classique, par un auto-corrélateur.

Description détaillée de modes de réalisation

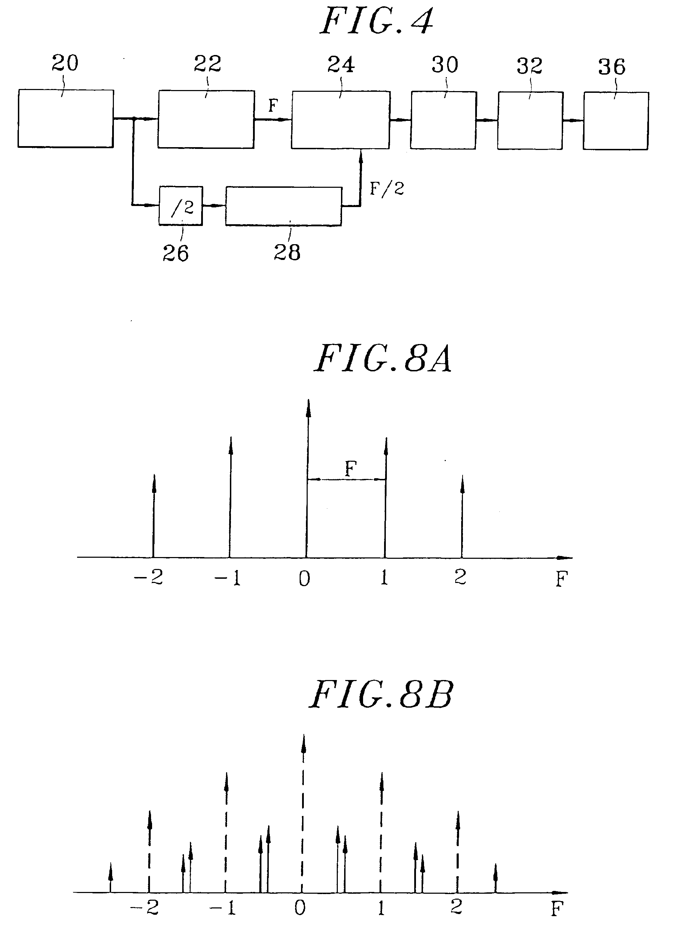

La figure 4 représente un mode de réalisation d'un dispositif selon l'invention, qui convient en particulier pour des impulsions à mesurer ayant un caractère périodique. Ces impulsions sont par exemple engendrées, à une fréquence F, par un générateur RF de fréquence 20 qui commande un générateur 22 d'impulsions optiques.

Il est également possible d'obtenir cette fréquence F à l'aide d'un circuit récupérateur d'horloge dont l'entrée est attaquée par un signal prélevé en sortie du générateur d'impulsions, en particulier si l'accès à la fréquence pilote F est problématique.

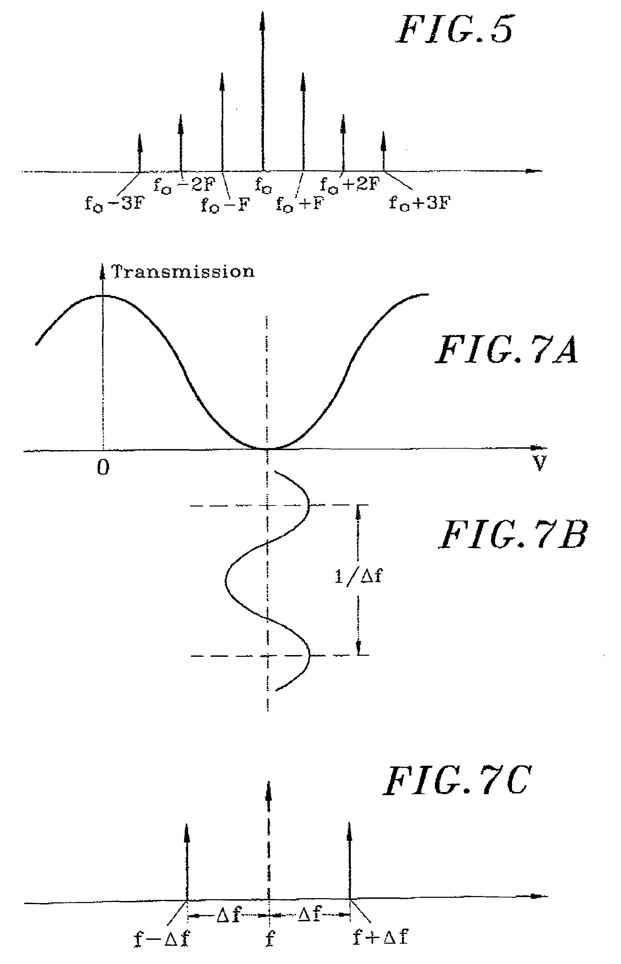

Le générateur d'impulsions 22 produit un spectre de raies de fréquence $f_n=f_o\pm nF$ (figure 5). On appelle encore la porteuse "raie d'ordre O" : $f_o$, et raie d'ordre n la raie de fréquence $f_n$.

Une partie de la puissance du signal d'horloge passe par un diviseur 26 de fréquence par 2, puis par une ligne à retard variable 28 avant d'attaquer un modulateur électro-optique 24. Le signal optique émergeant du modulateur électro-optique est analysé par un analyseur de spectre optique, constitué ici d'un filtre accordable 30 suivi d'un photorécepteur 32. On peut aussi utiliser un déphaseur, en remplacement de la ligne à retard variable. On peut aussi utiliser, pour réaliser ce déphasage, de moyens, disposés en sortie du générateur 22 d'impulsions optiques, pour réaliser un retard optique.

Le modulateur électro-optique 24 est par exemple un modulateur Mach-Zehnder. Un tel modulateur est décrit dans le livre de Irène et Michel JOINDOT : "Les télécommunications par fibres optiques", pages 380-385, DUNOD, 1996.

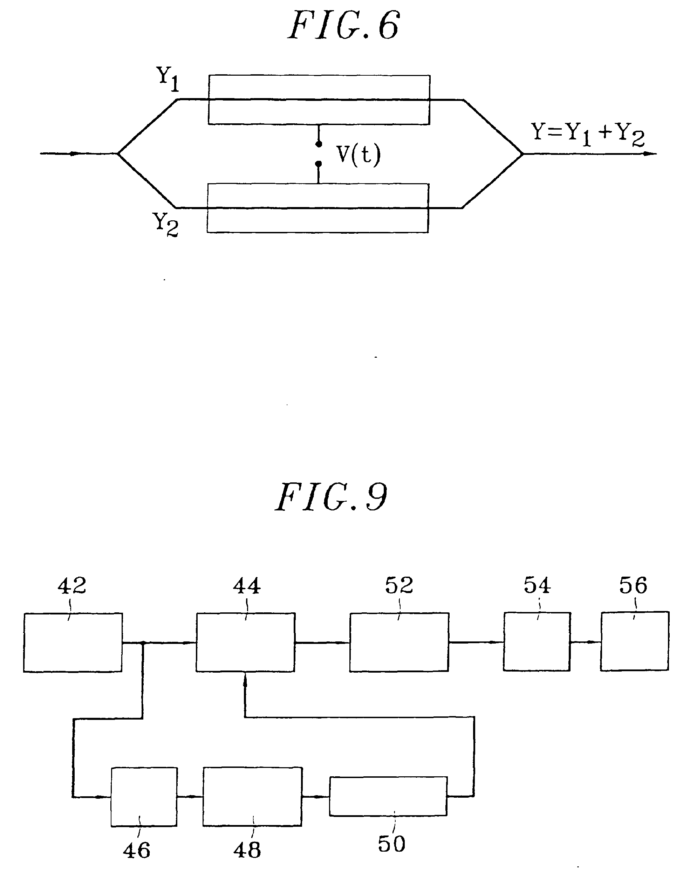

La figure 6 illustre le fonctionnement d'un modulateur Mach-Zehnder. A partir d'un signal d'entrée I, on obtient un signal, ou champ optique, $y_1=E_1\cos(\omega t+\varphi_1)$ dans une branche du modulateur et un signal, ou champ optique, $y_2=E_2\cos(\omega t+\varphi_2)$ dans l'autre branche. Le signal de sortie est égal à la somme $y_1+y_2$ des signaux dans chaque branche.

Pratiquement, on polarise le modulateur en un point qui éteint le signal optique $y=y_1+y_2$ (à toutes les fréquences $f_o\pm nF$). Pour cela, on introduit une différence de phase de $\pi$ entre les deux bras du dispositif.

Par ailleurs, on applique, en tant que signal de commande du modulateur (figure 7B), une tension sinusoïdale de fréquence $\Delta f$, dont l'amplitude est faible par rapport à la tension $V\pi$ ($V\pi=$tension qui donne un taux de modulation de 100%). Si, à l'entrée du modulateur, le signal optique est un signal continu de fréquence optique f (figure 7A), le signal en sortie est constitué de deux raies de fréquence respective $f-\Delta f$ et $f+\Delta f$, la porteuse de fréquence f étant supprimée (figure 7C).

Avec le dispositif décrit ci-dessus, un spectre optique de raies, présent à l'entrée du modulateur et ayant la forme illustrée en figure 8A, est transformé en un autre spectre optique, les fréquences optiques des raies de ce spectre se situant aux valeurs $f'_n=f_o\pm(n+0,5)F$ avec n=ordre des raies du signal à mesurer (figure 8B).

En modifiant le retard $\tau$ de la ligne à retard 28 (ou, comme déjà mentionné ci-dessus, à l'aide d'un déphaseur ou d'un retard optique en sortie du générateur 22), on peut faire varier la phase du signal sinusoïdal de fréquence F/2, par rapport à la phase du train d'impulsions optiques de fréquence F arrivant sur le modulateur électro-optique. Alors, l'intensité des raies d'ordres n+0,5 varie de façon sinusoïdale, en fonction de $\tau$ (ou du déphasage, ou du retard optique), avec une période T=1/F et une phase qui correspond à la différence de phase optique entre les raies d'ordres n et n+1. De la différence de phase entre deux raies adjacentes, on peut remonter à la phase de chaque raie.

On peut, par exemple, procéder de la manière suivante.

Soit $t_{n,n+1}$=retard indiqué sur la ligne à retard, pour lequel les deux raies n et n+1 sont en coïncidence sur un point particulier et arbitraire de la sinusoïde (ce point peut être le maximum, ou le minimum, ou le passage à zéro par valeur positive, ou le passage à zéro par valeur négative, etc...)

Soit $t_o$ un instant de référence tel que :

$$t_O = \frac{1}{2} \times \left[ t_{-1,0} + t_{0,1} \right] \qquad (1)$$

Et soit $\varphi_0$ la phase de référence :

$$\varphi_0 = 0 \qquad (2)$$

($\varphi_0$= phase de la raie centrale : n=0).

Ces choix sont arbitraires, et ils sont uniquement guidés par un souci de symétrie par rapport à la raie la plus intense (d'ordre 0).

Alors, la phase $\varphi_n$, de la raie d'ordre n, peut être obtenue par les relations de récurrence :

$$\varphi_n = \Omega(t_0 - t_{n-1,n}) + \varphi_{n-1} \qquad \text{pour } n>0 \qquad (3)$$

et

$$\varphi_n = \varphi_{n-1} - \Omega(t_0 - t_{n,n+1}) \qquad \text{pour } n<0 \qquad (4),$$

avec :

$$\Omega = 2\pi F \qquad (5)$$

Si, à la place d'une ligne à retard, on utilise un déphaseur, la relation entre le temps t et la phase $\varphi$ à la fréquence F est la suivante :

$$\varphi = 2\pi F t \qquad (6)$$

Une autre manière de procéder est d'enregistrer l'intensité I des raies n+0,5 en fonction du retard t de la ligne à retard (ou de la phase d'un déphaseur) et de calculer la transformée de Fourier de I(t) pour avoir accès à la phase de l'harmonique 1. Alors, avec les relations 1 à 6, on remonte à la phase de chaque raie.

La mesure de la phase de chaque raie, associée à la mesure classique du spectre d'intensité, permet de connaître complètement le signal électromagnétique qu'est l'impulsion optique. Par exemple, la transformée de Fourier inverse du spectre complexe donne accès au profil de l'impulsion optique ainsi qu'à la variation de la fréquence optique instantanée ("chirp").

Le dispositif selon l'invention permet de convertir, à l'instant $\tau$ imposé par la ligne à retard 28, chaque raie de fréquence $f_n$ en deux raies de fréquence $f_n$-F/2 et $f_n$+F/2 (F= fréquence qui sépare deux raies adjacentes). Les deux nouvelles raies $f_n$+F/2 et $f_{n+1}$-F/2 ont la même fréquence, et peuvent être isolées facilement à l'aide d'un filtre suffisamment étroit. Si ces deux raies sont en phase, il y a interférence constructive, et l'intensité résultante I est maximale. Lorsque ces deux raies sont en opposition de phase, I est minimale. Si on fait varier $\tau$ (instant de conversion), I($\tau$) est alors une fonction sinusoïdale dont la phase correspond à la phase recherchée. On notera que la conversion de fréquences de toutes les raies se fait simultanément.

Le dispositif, ou les moyens de détection 32, délivre des signaux représentatifs des interférences aux fréquences $f_n \pm$F/2. Ces signaux peuvent être traités et/ou analysés par tout moyen approprié pour fournir des données pouvant être elles-mêmes analysées et/ou mémorisées. A cette fin, des moyens 36 d'acquisition et/ou d'analyse et, éventuellement, de mémorisation, peuvent être prévus. Ces moyens comportent par exemple un micro-ordinateur conventionnel pouvant être spécialement programmé pour l'analyse et/ou l'acquisition et/ou la mémorisation des données.

De même, ou de manière alternative, des moyens 36 (par exemple : un micro-ordinateur) peuvent être prévus pour commander ou piloter le procédé mis en oeuvre à l'aide du dispositif de la figure 4.

Dans les deux cas, les instructions de programmation pour l'analyse et/ou l'acquisition et/ou la mémorisation des données et/ou la commande du dispositif sont stockées sur des unités RAM ou ROM conventionnelles.

On a vu ci-dessus que les phases $\varphi_1$ et $\varphi_2$ de chaque branche du modulateur électro-optique sont modulables par l'application d'un champ électrique extérieur. Si l'on ne module que la phase de l'un des bras ($\varphi_1$ par exemple), la fréquence optique du champ résultant ($y=y_1+y_2$) est modifiée de la quantité $d\varphi_1/dt$ ("chirp"). Pour éliminer ce "chirp" on module les deux phases $\varphi_1$ et $\varphi_2$ de telle manière que $\dfrac{d\varphi_1}{dt} = -\dfrac{d\varphi_2}{dt}$ ; ainsi la fréquence optique de $y=y_1+y_2$ reste constante. La plupart des modulateurs commerciaux ne possèdent qu'une entrée électrique pour moduler le signal optique. Alors, les électrodes aux bornes desquelles est appliquée la tension de modulation sont telles que les champs électriques dans les deux bras sont de signes opposés et de même valeur absolue.

De préférence, l'amplitude v de la tension sinusoïdale appliquée au modulateur Mach-Zehnder est faible par rapport à V$\pi$ (V$\pi$=tension qui permet un taux de modulation de 100%). Si l'amplitude v est trop forte il y a génération de fréquences harmoniques. L'harmonique 2 n'est pas gênant car il se situe aux fréquences d'ordre n (n=entier), c'est-à-dire en dehors des fréquences de mesure (voir figure 8B). En revanche, l'harmonique 3 se situe aux fréquences d'ordres 0,5+n (n=entier) et peut donc perturber la mesure (voir figure 8B). Un calcul simple montre que le taux d'harmonique 3 a pour expression $H_3=0{,}1\varepsilon^2$ avec $\varepsilon = \dfrac{v}{V\pi} = \texttt{taux de modulation.}$ Cela montre que l'erreur engendrée par l'approximation "petits signaux" est négligeable, même pour un taux de modulation aussi important que 30%.

On peut de plus montrer que, toujours pour une valeur du taux de modulation $\varepsilon$ inférieure à 30%, le dispositif est peu sensible à une modulation de phase optique dissymétrique dans les deux bras du modulateur. Toute modulation de phase optique dissymétrique engendre une modulation de fréquence optique parasite ("chirp") . L'inconvénient de cette modulation de fréquence parasite est la génération de raies parasites d'harmonique 3 dont un calcul simple montre que sa valeur relative par rapport à l'harmonique 1 est :

$$H_3 \approx 0{,}3\varepsilon^2 \frac{\Delta\varepsilon}{\varepsilon} \texttt{ avec } \varepsilon = \frac{v}{V\pi} = \texttt{ taux de modulation et}$$

$$\frac{\Delta\varepsilon}{\varepsilon} = \texttt{ déséquilibre du taux de modulation entre les deux}$$

$$\texttt{bras du Mach-Zehnder.}$$ En supposant $\varepsilon$ petit ($\varepsilon<0{,}3$), $H_3$ est négligeable, même si $\dfrac{\Delta\varepsilon}{\varepsilon}$ est rela-tivement important ($\dfrac{\Delta\varepsilon}{\varepsilon}$ est au maximum égal à 1 lorsque l'on ne module qu'un seul bras du Mach- Zehnder).

Le dispositif selon l'invention offre, en outre, l'avantage de présenter une certaine tolérance sur la valeur du point de polarisation.

Le modulateur est, en effet, de préférence polarisé en un point qui éteint le signal optique (voir figures 7A et 7B). Cela est obtenu en introduisant une différence de phase de $\pi$ entre les deux bras du Mach-Zehnder. Soit $\varepsilon_p$ une erreur du point de polarisation par rapport à $\pi$, exprimée en radian. Un calcul simple montre que cette erreur a pour effet d'engendrer des raies parasites aux fréquences d'ordre n(n=entier) c'est-à-dire en dehors des fréquences de mesure (voir figure 6B) qui, elles, se situent aux fréquences d'ordre n+0,5 (n entier).

La variation de l'instant T de conversion de la fréquence optique $f_n$ en $f_n$+F/2 et $f_n$-F/2 peut également se faire de façon statique, sans utilisation de ligne à retard variable ou de déphaseur variable. Pour cela, on remplace cette ligne à retard variable par un moyen qui décale la fréquence électrique F/2 d'une valeur très faible, par rapport à F, $\Delta$F, de l'ordre de quelques kHz (par exemple : 2kHz ou 5kHz) . Dans ce cas, le modulateur électro-optique est attaqué par la fréquence F/2$\pm\Delta$F au lieu de F/2. L'intensité I(t), qui se situe aux fréquences d'ordre 0,5+n (n=entier), est alors une fonction sinusoïdale de fréquence 2$\Delta$F, et dont la phase est la différence de phase entre les raies d'ordre n et n+1 du signal. Cette phase est facile à mesurer, car elle est relative à une fréquence qui peut être fixée, avantageusement, dans le domaine des basses fréquences (quelques kHz).

La translation de la fréquence électrique F/2 vers la fréquence F/2$\pm\Delta$F peut par exemple se faire à l'aide d'un VCO ("Voltage Control Oscillator") et d'un discriminateur de fréquences centré sur $\Delta$F.

Selon une autre variante, on peut attaquer le modulateur électro-optique par un signal sinusoïdal de fréquence F. Dans ce cas, il y a conversion de la fréquence optique $f_n$ en deux fréquences $f_n$-F et $f_n$+F. Ainsi, à la fréquence optique qui correspond à l'ordre n, il y a addition des raies transposées $f_{n-1}$ et $f_{n+1}$, ainsi qu'un résidu de la porteuse $f_n$. Dans la mesure où on ne peut l'éliminer complètement, il est alors préférable de garder une partie de la porteuse $f_n$ en polarisant le modulateur, avec une différence de phase, comprise entre $\pi$ et $\pi/2$, entre les deux bras du Mach-Zehnder. Dans ces conditions, si l'on fait varier la phase du signal électrique sinusoïdal de fréquence F attaquant le modulateur, par rapport à la phase du train d'impulsions optiques de fréquence F traversant ce modulateur, et cela en modifiant le retard $\tau$ de la ligne à retard 28 ou en modifiant le déphaseur, alors, l'intensité I($\tau$) située aux fréquences optiques d'ordre n(n=entier) varie de façon périodique avec une période T=1/F. En analysant le signal périodique I($\tau$), notamment par transformée de Fourier, il est possible de calculer les différences de phase entre les raies n, n-1 et n+1, et ainsi de remonter à la phase de chaque raie.

Pour cela considérons trois ondes caractérisées chacune par son amplitude $a_i$ (i=1, 2, 3) et sa phase $\varphi_i$ (i=1, 2, 3). La somme de ces trois ondes est alors :

$$y = a_1 e^{j\varphi_1} + a_2 e^{j\varphi_2} + a_3 e^{j\varphi_3} \qquad (7)$$

et l'intensité résultante :

$$yy^* = a_1^2 + a_2^2 + a_3^2 + 2a_1 a_2 \cos(\varphi_1 - \varphi_2) + 2a_2 a_3 \cos(\varphi_2 - \varphi_3) + 2a_3 a_1 \cos(\varphi_3 - \varphi_1) \qquad (8)$$

Les phases $\varphi_i$ sont fonction du retard $\tau$ introduit par la ligne à retard :

$$\varphi_1 = \Phi_1 - \Omega\tau, \quad \varphi_2 = \Phi_2, \quad \varphi_3 = \Phi_3 + \Omega\tau \qquad (9)$$

avec

$$\Omega = 2\pi F \qquad (10)$$

Alors (8) devient :

$$I(\tau) = H_0 + H_1 + H_2 \qquad (11),$$

avec :

$$- H_0 = a_1{}^2 + a_2{}^2 + a_3{}^2 \qquad (12)$$

$$- H_1 = 2a_1 a_2 \cos(\Phi_2 - \Phi_1 + \Omega\tau) + 2a_2 a_3 \cos(\Phi_3 - \Phi_2 + \Omega\tau) \qquad (13)$$

$$- H_2 = 2a_3 a_1 \cos(\Phi_3 - \Phi_1 + 2\Omega\tau) \qquad (14).$$

$H_0$ représente alors la composante continue de la T.F. (transformée de Fourier) de $I(\tau)$. $H_1$ représente l'harmonique 1 de la T.F. de $I(\tau)$ et $H_2$ l'harmonique 2.

Soient $\alpha_1$=phase de $H_1$ et $\alpha_2$=Phase de $H_2$.

Alors :

$$\Phi_3 - \Phi_1 = \alpha_2 \qquad (15).$$

L'harmonique $H_1$ est la somme de deux vecteurs de module respectif $2a_2 a_1$ et $2a_2 a_3$ et de phase respective : $\Phi_1 - \Phi_2$ et $\Phi_2 - \Phi_3$. La différence de phase de ces deux vecteurs est égale à :

$$m = \Phi_3 + \Phi_1 - 2\Phi_2 \qquad (16).$$

Les intensités $a_1{}^2$, $a_2{}^2$ et $a_2{}^2$ sont mesurées de façon classique à l'analyseur de spectre, ce qui donne accès aux modules $v_1$ et $v_2$. Le module de la résultante des deux vecteurs $v_1$ et $v_2$ est égal au module de $H_1$, d'où la connaissance de l'angle m de $v_1$ avec $v_2$ (résolution d'un triangle connaissant les trois côtés). D'où :

$$\cos m = - \frac{4a_1{}^2 + 4a_3{}^2 - |H_2|^2}{4a_1 a_3}$$

Connaissant $\alpha_2$, m et $\Phi_1$, on déduit, d'après (15) et (16), $\Phi_2$ et $\Phi_3$. En se fixant une phase de référence, par exemple $\Phi_0$=0 pour la raie d'ordre 0, on obtient les valeurs des phases des autres raies, avec même redondance.

Avec cette variante le moyen qui permet de convertir un signal ayant une seule raie f en un signal ayant cette même raie plus deux raies latérales f-F et f+F (F<<f) peut être en n'importe quel type de modulateur, par exemple un modulateur électro-absorbant ou même un modulateur de phase. Ces types de modulateurs sont notamment décrits dans "Physics of Optoelectronics Devices", pages 508 à 580, de Shun Lien Chuang, éditeur : Wiley-Interscience Publication New-York.

L'invention a été décrite ci-dessus dans le cas d'un spectre discret.

Le spectre d'un train d'impulsions, de fréquence de répétition F, est un spectre de raies dont l'enveloppe est la transformée de Fourier d'une impulsion isolée. La distance entre deux raies adjacentes est F. Si F diminue, le nombre de raies augmente et leur intensité diminue. Si F tend vers 0, le spectre devient un spectre continu et l'intensité des raies se transforme en densité d'énergie. Pratiquement on observe, à l'analyseur de spectre, un spectre continu lorsque la fréquence de répétition F est largement inférieure à la résolution de l'analyseur.

Lorsqu'on digitalise le spectre continu, on échantillonne avec un pas suffisamment fin pour conserver toute l'information. Pratiquement, c'est la durée utile de l'impulsion qui fixe le pas d'échantillonnage. Par exemple une impulsion de 10 ps de large à mi-hauteur, et qui possède toute son énergie dans une fenêtre de 50 ps, présente un spectre pour lequel l'échantillonnage est réalisé à 1/0,05=20GHz pour conserver toute l'information. Connaissant le pas d'échantillonnage minimal, on mesure alors la différence de phase entre deux échantillons adjacents. Pour cela, on utilise le dispositif représenté sur la figure 9. La référence 42 y désigne un générateur d'impulsions optiques. Les impulsions émises attaquent un modulateur électro-optique 44, par exemple de type Mach-Zehnder (avec les mêmes avantages que déjà décrits ci-dessus). Une partie de la puissance optique est envoyée sur un photorécepteur 46 qui déclenche un générateur RF 48, verrouillé en phase. Celui-ci génère une tension sinusoïdale, dont la fréquence F est fonction du pas d'échantillonnage du spectre, et qui est appliquée au modulateur 44 par l'intermédiaire d'une ligne à retard $\tau$ variable

50. Un filtre optique accordable 52 constitue, avec un photodétecteur 54, un analyseur de spectre optique. En sortie du filtre 52, l'intensité optique, à la fréquence optique f, est une fonction sinusoïdale du retard $\tau$ : $I(\tau) = S(f-F) + S(f+F)$. La phase de cette sinusoïde correspond à la différence de phase $S(f)$ entre les fréquences $f-F$ et $f+F$. En faisant varier f, par de 2F, on remonte à la phase de tous les échantillons du spectre espacés de 2F, comme dans le cas d'un spectre de raies.

Le générateur RF 48 verrouillé en phase avec l'impulsion à mesurer peut être constitué par un simple filtre passe-bande étroit, centré sur F.

Enfin, a référence 56 désigne des moyens d'acquisition et/ou d'analyse et, éventuellement, de mémorisation des données ou des signaux produits par le photorécepteur 54 et/ou des moyens de commande du dispositif de la figure 9. Ces moyens 56 sont équivalents aux moyens 36 déjà décrits ci-dessus en liaison avec la figure 4.

Une application va maintenant être décrite, qui concerne la mesure du "chirp" d'un émetteur optique.

La variation de l'intensité lumineuse issue d'un émetteur optique est accompagnée par une variation de la fréquence de la porteuse optique ("chirp"). Le "chirp" est un phénomène qui influe sur la transmission optique, il est donc important de le mesurer.

Le "chirp" est caractérisé par le paramètre $\alpha$ défini par la relation $\alpha = 2I \dfrac{\Delta\Phi}{\Delta I}$ avec I=intensité optique et

$\Delta\Phi$=variation de la phase optique engendrée par la variation d'intensité $\Delta I$.

Pour mesurer $\alpha$, il suffit de moduler faiblement et de façon sinusoïdale à la fréquence F l'intensité I. L'émetteur optique délivre alors trois raies optiques : la porteuse $A_0$ et les deux raies latérales $A_{-1}$ et $A_{+1}$. La relation de phase entre ces raies est alors mesurée à l'aide par exemple du dispositif de la figure 4, l'émetteur optique prenant la place du générateur d'impulsions 22. Dans ce cas, un calcul simple donne $\alpha = \mathrm{tg}[(\tau_1 - \tau_2)\pi F]$, où :

- $\tau_1$ est la position de la ligne à retard pour laquelle l'intensité $I(\tau)$, à la fréquence d'ordre -0,5 (ordre compris entre -1 et 0), est minimale (ou maximale),
- $\tau_2$ est la position de la ligne à retard à laquelle l'intensité $I(\tau)$, à la fréquence d'ordre +0,5, est minimale (ou maximale),
- F est la fréquence de modulation appliquée à l'émetteur,
- $I(\tau)$ est l'intensité mesurée à l'analyseur de spectre.

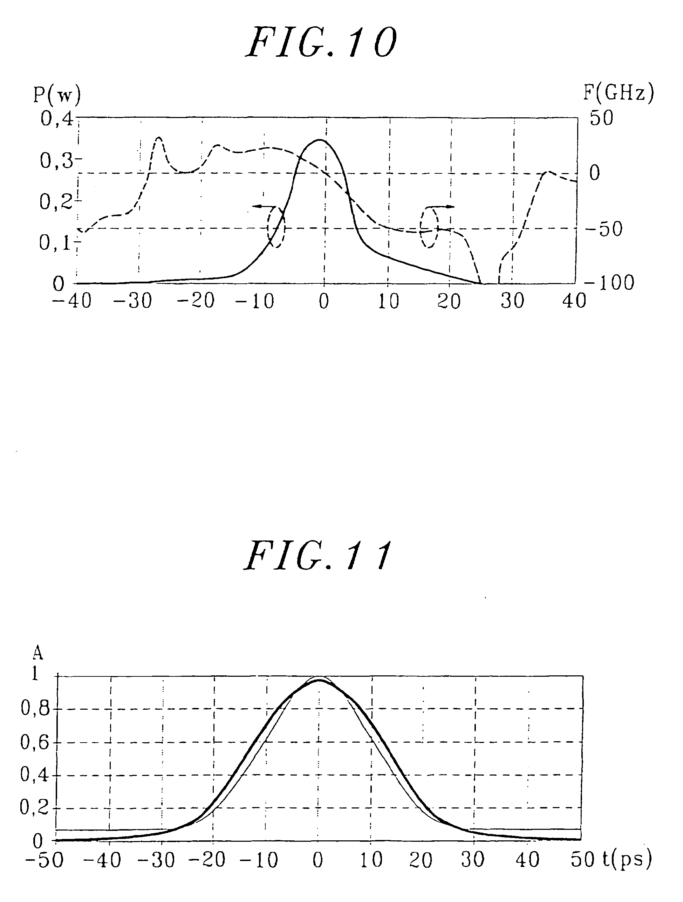

Les figures 10 et 11 représentent les résultats d'un exemple de mesure d'un générateur d'impulsions optiques constitué par un laser fonctionnant en commutation de gain.

Sur la figure 10, la courbe en trait plein représente la puissance P de l'impulsion (en watt) en fonction du temps. Cette intensité I(t) est calculée d'après la mesure, du spectre complexe V(f). En effet, $I(t) = v(t)v(t)^*$ avec $v(t) = \mathrm{T.F.}^{-1}[V(f)]$ ($\mathrm{T.F.}^{-1}$= tranformée de Fourier inverse).

Sur cette même figure, la courbe en trait pointillé représente la variation de fréquence instantanée F (en GHz) de la porteuse optique en fonction du temps ("chirp") : $f_i(t)$. Cette variation de fréquence est déduite de V(f), et est mesurée par la relation $f_i(t) = \dfrac{1}{2\pi} \times \dfrac{d\theta(t)}{dt}$ , , avec $\theta(t)$=argument de v(t) et $v(t) = \mathrm{T.F.}^{-1}[V(f)]$.

Il est également possible de calculer, d'après V(f) mesuré, la fonction d'auto-corrélation (figure 11, trait fin) et de la comparer à celle mesurée, de façon classique, par un auto-corrélateur (figure 11, trait épais). Compte tenu de l'incertitude de mesure de l'auto-corrélateur, un bon accord est obtenu entre les deux résultats de mesure. Sur la figure 11, A représente l'amplitude normalisée de la fonction d'auto-corrélation, en fonction du temps t (en ps).

**Revendications**

**1.** Dispositif pour la détermination du spectre complexe d'un signal optique, ledit spectre comportant une composante spectrale à une fréquence optique centrale $f_0$ et des raies de fréquences $f_n = f_0 \pm nF$, n entier, F une fréquence prédéterminée **caractérisé en ce qu'**il comporte:

- un circuit de récupération d'un signal électrique d'horloge à partir dudit signal optique;
- un diviseur de fréquences spectrales par 2 (26) apte à diviser la fréquence du signal d'horloge récupére;
- une ligne à retard variable (28) apte à retarder ledit signal électrique d'horloge récupéré et divisé avec ledit retard variable;
- un modulateur électro-optique d'intensité (24) apte à être commandé par ledit signal électrique d'horloge retardé et divisé et à transformer ledit signal optique reçu en entrée en un signal optique de sortie présentant des raies dont l'intensité varie en fonction du retard variable et dont la phase correspond à une différence de phase entre deux raies adjacentes du signal d'entrée;
- un analyseur de spectre optique ((30, 32);(52, 54)) pour mesurer l'intensité et la phase des raies du signal de sortie;
- des moyens de traitement (36, 56) aptes à dériver de mesures d'intensité et de phase des raies du signal de sortie pour plusieurs valeurs de retard, des mesures d'intensité et de phase des raies du signal d'entrée.

**2.** Dispositif selon la revendication 1, **caractérisé en ce que** l'analyseur de spectre optique comprenne un filtre spectral accordable (30, 52) apte à isoler une raie du spectre de sortie suivi d'un photorécepteur (32) apte à détecter la dite raie.

**3.** Dispositif selon la revendication 1, **caractérisé en ce que** le signal électrique d'horloge retardé, utilisé pour commander le modulateur électro-optique (24), présente une tension sinusoïdale faible par rapport à là tension qui donne un taux de modulation de 100 % en sortie du modulateur (24).

**4.** Dispositif selon la revendication 1, **caractérisé en ce que**

- le modulateur électro-optique est polarisé en un point qui éteint le signal optique de sortie; et **en ce que**
- les deux raies adjacentes $f_n$, $f_{n+1}$ du signal d'entrée sont converties dans le modulateur en deux raies du signal de sortie de même fréquence $f_n$ +0,5F.

**5.** Dispositif selon la revendication 1, **caractérisé en ce que** le modulateur est un modulateur de type Mach-Zehnder comprenant deux bras, **en ce qu'**il est polarisé en un point correspondant à une différence de phase entre ses deux bras située entre pi et pi/2 et **en ce qu'**une raie de fréquence $f_n$ du signal d'entrée est convertie en une raie du signal de sortie de fréquence $f_n$ comprenant une addition des raies transposées- $f_{n-1}$ et $f_{n+1}$ et un résidu de la raie de fréquence $f_n$ du signal d'entrée.

**Claims**

**1.** Device for determining the complex spectrum of an optical signal, said spectrum comprising a spectral component at a central optical frequency $f_0$ and rays of frequency $f_n = f_0 \pm nF$, n being an integer and f a predetermined frequency, **characterized in that** it comprises:

- a circuit for recovering an electrical clock signal from said optical signal;
- a divider of spectral frequencies by 2 (26) able to divide the frequency of the recovered clock signal;
- a variable delay line (28) able to delay said recovered and divided electrical clock signal with said variable delay;
- an electrooptical intensity modulator (24) able to be controlled by said delayed and divided electrical clock signal and transform said optical signal received at the input into an output optical signal having rays with an intensity that varies according to the variable delay and with a phase that corresponds to a phase difference between two adjacent rays of the input signal;
- an optical spectrum analyser ((30, 32); (52, 54)) for measuring the intensity and the phase of the rays of the output signal;
- processing means (36, 56) able to derive from measurements of the intensity and phase of the rays of the output signal for several delay values, measurements of the intensity and phase of the rays of the input signal.

**2.** Device according to Claim 1, **characterized in that** the optical spectrum analyser includes a tuneable spectral filter (30, 52) able to isolate a ray of the output spectrum followed by a photoreceiver (32) able to detect said ray.

**3.** Device according to Claim 1, **characterized in that** the delayed electrical clock signal, used to control the optoelectrical modulator (24), presents a weak sinusoidal voltage compared to the voltage that gives a modulation rate of 100% at the output of the modulator (24).

**4.** Device according to Claim 1, **characterized in that**

- the optoelectrical modulator is polarized at a point which switches off the output optical signal; and **in that**
- the two adjacent rays $f_n$, $f_{n+1}$ of the input signal are converted in the modulator into two rays of the output signal of the same frequency $f_n$ +0.5F.

**5.** Device according to Claim 1, **characterized in that** the modulator is a Mach-Zehnder type modulator comprising two arms, **in that** it is polarized at a point corresponding to a phase difference between its two arms situated between pi and pi/2 and **in that** a ray of frequency $f_n$ of the input signal is converted into a ray of the output signal of frequency $f_n$ comprising an addition of the transposed rays $f_{n-1}$ and $f_{n+1}$ and a residue of the ray of frequency $f_n$ of the input signal.

**Patentansprüche**

**1.** Vorrichtung zur Bestimmung des komplexen Spektrums eines optischen Signals, wobei das Spektrum eine spektrale Komponente mit einer zentralen optischen Frequenz $f_0$ und Frequenzlinien $f_n = f_0 \pm nF$ aufweist, wobei n eine ganze Zahl und F eine vorbestimmte Frequenz ist, **dadurch gekennzeichnet, dass** sie aufweist:

- eine Rückgewinnungsschaltung eines elektrischen Taktsignals ausgehend vom optischen Signal;
- ein Halbierer von Spektralfrequenzen (26), der die Frequenz des rückgewonnenen Taktsignals teilen kann;
- eine Leitung mit variabler Verzögerung (28), die das rückgewonnene und geteilte elektrische Taktsignal um die variable Verzögerung verzögern kann;
- einen elektro-optischen Intensitätsmodulator (24), der vom verzögerten und geteilten elektrischen Taktsignal gesteuert werden und das am Eingang empfangene optische Signal in ein optisches Ausgangssignal umwandeln kann, das Linien aufweist, deren Intensität in Abhängigkeit von der variablen Verzögerung variiert und deren Phase einer Phasendifferenz zwischen zwei benachbarten Linien des Eingangssignals entspricht;
- einen optischen Spektrumanalysator ((30, 32);(52, 54)), um die Intensität und die Phase der Linien des Ausgangssignals zu messen;
- Verarbeitungseinrichtungen (36, 56), die von Intensitäts- und Phasenmessungen der Linien des Ausgangssignals für mehrere Verzögerungswerte Intensitäts- und Phasenmessungen der Linien des Eingangssignals ableiten können.

**2.** Vorrichtung nach Anspruch 1, **dadurch gekennzeichnet, dass** der optische Spektrumanalysator ein abstimmbares Spektralfilter (30, 52), das eine Linie des Ausgangsspektrums isolieren kann, gefolgt von einem Fotoempfänger (32) aufweist, der die Linie erfassen kann.

**3.** Vorrichtung nach Anspruch 1, **dadurch gekennzeichnet, dass** das verzögerte elektrische Taktsignal, das verwendet wird, um den elektro-optischen Modulator (24) zu steuern, eine schwache Sinusspannung bezüglich der Spannung hat, die einen Modulationsgrad von 100 % am Ausgang des Modulators (24) ergibt.

**4.** Vorrichtung nach Anspruch 1, **dadurch gekennzeichnet, dass**

- der elektro-optische Modulator an einem Punkt polarisiert ist, der das optische Ausgangssignal löscht; und dass
- die zwei benachbarten Linien $f_n$, $f_{n+1}$ des Eingangssignals im Modulator in zwei Linien des Ausgangssignals gleicher Frequenz $f_n + 0,5F$ umgewandelt werden.

**5.** Vorrichtung nach Anspruch 1, **dadurch gekennzeichnet, dass** der Modulator ein Modulator vom Typ Mach-Zehnder mit zwei Armen ist, dass er an einem Punkt polarisiert ist, der einer Phasendifferenz zwischen seinen zwei Armen entspricht, die sich zwischen pi und pi/2 befindet, und dass eine Frequenzlinie $f_n$ des Eingangssignals in eine Linie des Ausgangssignals der Frequenz $f_n$ umgewandelt wird, die eine Addition der transponierten Linien $f_{n-1}$ und $f_{n+1}$ und einen Rest der Frequenzlinie $f_n$ des Eingangssignals enthält.

## FIG.1

## FIG.2

## FIG.3

# FIG.4

# FIG.8A

# FIG.8B

*FIG.5*

$f_o-3F$  $f_o-2F$  $f_o-F$  $f_o$  $f_o+F$  $f_o+2F$  $f_o+3F$

Transmission

*FIG.7A*

0                                    V

*FIG.7B*

$1/\Delta f$

*FIG.7C*

$f-\Delta f$  $\Delta f$  $f$  $\Delta f$  $f+\Delta f$

## FIG.6

$Y_1$

$V(t)$

$Y_2$

$Y = Y_1 + Y_2$

## FIG.9

42    44    52    54    56

46    48    50

## FIG.10

## FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R.A. Linke et al.** Modulation Induced Transient Chirping in Single Frequency Lasers. *IEEE Journal Quantum Electronics,* 1985, vol. 21, 593-597
- **J.L.A. Chilla et al.** Direct determination of the amplitude and the phase of femtosecond light pulses. *Optics Letters,* 1991, vol. 16 (1), 39-41
- **D.J. Kane et al.** Characterization of Arbitrary Femtosecond Pulses Using Frequency-Resolved Optical Gating. *IEEE Journal Quantum Electronics,* 1993, 571-579

- **B.S. Prade et al.** A Simple method for the determination of the intensity and phase of ultrashort optical pulse. *Optics Communications,* 1994, 79-84
- **Tomaru T. et al.** Linear Measurement of Weak 1.57 Mum Optical Pulse Train by Heterodyne Autocorrelation. *Applied Physics Letters,* vol. 69 (26
- **Irène et Michel JOINDOT.** Les télécommunications par fibres optiques. *Les télécommunications par fibres optiques,* 1996, 380-385